Europäisches Patentamt

European Patent Office

Office européen des brevets

(11) Numéro de publication : **0 467 812 A1**

# (12) DEMANDE DE BREVET EUROPEEN

(21) Numéro de dépôt : **91420259.3**

(22) Date de dépôt : **16.07.91**

(51) Int. Cl.⁵ : **A01K 89/01**

---

(30) Priorité : **20.07.90 FR 9009470**

(43) Date de publication de la demande :
**22.01.92 Bulletin 92/04**

(84) Etats contractants désignés :
**BE ES IT**

(71) Demandeur : **MITCHELL SPORTS S.A.**
**30, rue de Messy**
**F-74300 Cluses (FR)**

(72) Inventeur : **l'Host, Pierre**
**Le Martelet**
**F-74300 Chatillon sur Cluses (FR)**

(74) Mandataire : **de Beaumont, Michel**
**Cabinet Poncet 7, chemin de Tillier B.P. 317**
**F-74008 Annecy RP Cédex (FR)**

---

(54) **Moulinet de pêche à verrouillage de bobine et de récupérateur.**

㊄   Le moulinet selon l'invention est muni de moyens de verrouillage en rotation du tambour et de la bobine, commandés par la position du bras de récupérateur (4). Le verrouillage est assuré par un levier de tambour (10) et un levier de bobine (14) montés tous deux rotatifs selon des axes transversaux respectifs, et actionnés par un arbre de transmission (18) transversal dont une extrémité est reliée à un point excentrée du bras de récupérateur (4) par un ressort (21). En amenant le bras de récupérateur (4) en position de lancer, on provoque le verrouillage. En ramenant le bras de récupérateur (4) en position de récupération, on produit le déverrouillage.

EP 0 467 812 A1

Jouve, 18, rue Saint-Denis, 75001 PARIS

Fig_1

La présente invention concerne les moulinets de pêche à bobine fixe, dans lesquels la récupération de fil est assurée en maintenant la bobine en position axiale fixe et en enroulant le fil autour de la bobine fixe par un récupérateur rotatif, des moyens permettant de faire osciller longitudinalement la bobine en fonction de la rotation du tambour de récupérateur.

Les moulinets de pêche à bobine fixe comprennent une bobine à axe longitudinal montée sur le corps de moulinet et sollicitée par des moyens interdisant sa rotation autour de son axe par rapport au corps de moulinet pendant les étapes de récupération du fil. Un récupérateur est monté rotatif selon l'axe de la bobine, et est sollicité par un mécanisme d'entraînement en rotation actionné par une manivelle. Le récupérateur comporte une partie externe déportée latéralement à l'extérieur de la bobine et se développant de l'arrière vers l'avant de la bobine. La partie externe de récupérateur comprend généralement un bras de récupérateur, articulé sur sa base et pouvant pivoter autour d'un axe transversal entre une première position de récupération dans laquelle le bras est orienté longitudinalement en périphérie de la bobine, et une seconde position de lancer dans laquelle le bras est à l'écart de la bobine. L'extrémité du bras de récupérateur comporte des moyens de guidage de fil. En position de récupération, les moyens de guidage de fil du bras de récupérateur guident le fil de pêche et l'enroulent autour de la bobine lors de la rotation du récupérateur actionné par la manivelle. En position de lancer, le bras de récupérateur est escamoté pour libérer le fil de pêche et permettre son dévidement hors de la bobine.

Dans les moulinets habituels à bobine fixe, la bobine est montée sur un arbre longitudinal central qui peut tourillonner dans le corps de moulinet, sous l'action d'une traction du fil enroulé sur la bobine, à l'encontre du couple de freinage exercé par un frein de bobine.

De tels moulinets classiques présentent des inconvénients lorsque le pêcheur veut effectuer un lancer long, par exemple pour lancer à partir du rivage une ligne comportant des plombs lourds. En effet, plusieurs caractéristiques contradictoires doivent être réunies : tout d'abord, dès la fin du lancer, le couple de freinage du frein de bobine doit se trouver réglé selon une valeur relativement faible, pour favoriser la prise du poisson. Il en résulte que, pendant le lancer, le frein de bobine n'assure pas un effort de retenue sensible du fil. Au cours de la première phase du lancer, le pêcheur doit pincer le fil sur la canne, pour donner de l'élan au plomb fixé en bout de ligne. Comme le frein de bobine n'apporte aucun soutien pour aider l'effort de freinage du fil assuré par le pincement du fil entre le doigt et la canne, il se produit souvent un glissement du fil, qui entaille le doigt de l'utilisateur. Outre l'inconvénient des blessures ainsi produites, le lancer est moins performant.

Une seconde difficulté tient au fait que, pendant le lancer, la manivelle de moulinet tend à se déplacer par inertie, ce qui gêne l'utilisation. Le tambour tend également à pivoter axialement, par suite du mouvement de la manivelle, de sorte que le bras de récupérateur risque de pivoter vers sa position fermée, interrompant le lancer de façon intempestive.

Les documents FR-A-2 462 098, EP-A-0 026 084 et US-A-3 045 942 n'apportent qu'une solution partielle à ces problèmes, par des moyens de verrouillage du tambour seul.

On a proposé, dans le document US-A-4 509 705, un moulinet de pêche muni d'un dispositif de verrouillage de la bobine par rapport au tambour, et d'un dispositif de verrouillage simultané du tambour par rapport au corps de moulinet, les dispositifs de verrouillage étant déverrouillables par l'actionnement du bras de récupérateur lui-même lorsque l'utilisateur le repositionne à l'état de récupération.

En théorie, cette dernière solution est satisfaisante, puisque, pendant le lancer, le fil est retenu par la bobine verrouillée, et, en fin de lancer, la bobine est automatiquement déverrouillée par le fait que l'utilisateur fait pivoter le bras de récupérateur en position de récupération, autorisant le dévidement du fil par rotation de la bobine en cas de prise de poisson.

Toutefois, il apparaît qu'un tel dispositif ne donne pas satisfaction, car il conduit à augmenter sensiblement le coût de production du moulinet, et son fonctionnement n'est pas fiable.

Dans ce moulinet connu, les moyens de verrouillage de bobine et de tambour sont constitués par des pièces coulissantes, sollicitées chacune par un ressort de rappel indépendant, et actionnées par des moyens d'entraînement. Il en résulte un nombre relativement important de pièces mécaniques en mouvement, et ces mouvements sont des mouvements de translation susceptibles d'être freinés ou empêchés en cas d'introduction de poussière ou de sable dans les logements dans lesquels coulissent ces pièces de verrouillage.

La présente invention a notamment pour objet d'éviter les inconvénients de ces moulinets connus, en proposant une nouvelle structure de moulinet à verrouillage simultané de bobine et de tambour, dans laquelle le verrouillage simultané est réalisé par un nombre minimum de pièces mécaniques, sans nécessiter de ressorts auxiliaires de rappel, et sans recourir à des pièces en mouvement de translation.

Selon l'invention, tous les mouvements des pièces de verrouillage sont des mouvements de rotation, les pièces étant ainsi très peu sujettes à des coincements par grains de sable ou autres particules risquant de pénétrer accidentellement dans le moulinet.

L'invention permet un fonctionnement fiable des moyens de verrouillage, assurant le verrouillage de la bobine et du tambour pendant le lancer, et assurant un déverrouillage automatique et immédiat dès que l'utilisateur remet le bras de récupérateur en position de récupération.

Pour atteindre ces objets ainsi que d'autres, le moulinet selon l'invention est tel que :

– le corps de moulinet est muni de moyens permettant sa fixation à une canne à pêche,

– un tambour de récupérateur est monté rotatif sur le corps de moulinet selon un axe longitudinal, et est sollicité en rotation par une manivelle et un dispositif de transmission,

– un arbre central est porté à une extrémité par le corps de moulinet selon l'axe longitudinal, et traverse le tambour de récupérateur,

– une bobine est adaptée à l'autre extrémité de l'arbre central,

– des moyens font osciller longitudinalement l'arbre central et la bobine en fonction de la rotation du tambour de récupérateur,

– un bras de récupérateur est articulé à sa première extrémité sur la périphérie de tambour selon un axe transversal et porte à sa seconde extrémité des moyens de guidage de fil, le bras de récupérateur pouvant pivoter autour de son axe transversal entre une première position de récupération dans laquelle le bras est orienté longitudinalement en périphérie de la bobine, et une seconde position de lancer dans laquelle il est à l'écart de la bobine,

– un frein de bobine est adapté pour commander le couple de freinage en rotation axiale de la bobine par rapport au corps de moulinet,

– des moyens de verrouillage de tambour comprennent un levier de tambour, monté rotatif selon un axe II-II transversal entre une position verrouillée dans laquelle la première extrémité du levier de tambour est engagée sur une portion correspondante du corps de moulinet pour s'opposer à la rotation axiale du tambour, et une position déverrouillée dans laquelle la première extrémité du levier de tambour est à l'écart de la portion correspondante du corps de moulinet pour autoriser la libre rotation axiale du tambour,

– les moyens de verrouillage de bobine comprennent un levier de bobine, monté rotatif selon un axe transversal entre une position verrouillée dans laquelle la première extrémité du levier de bobine est engagée sur une portion correspondante de bobine pour s'opposer à la rotation axiale relative de la bobine par rapport au tambour, et une position déverrouillée dans laquelle la première extrémité du levier de bobine est à l'écart de la portion correspondante de bobine pour autoriser la libre rotation axiale de la bobine,

– des moyens de transmission assurent la liaison mécanique fonctionnelle entre le bras de récupérateur et respectivement le levier de bobine et le levier de tambour, pour amener les leviers de bobine et de tambour en position verrouillée lorsque le bras de récupérateur est en seconde position de lancer, et pour amener les leviers de bobine et de tambour en position déverrouillée lorsque le bras de récupérateur est en première position de récupération.

De préférence, lesdits moyens de transmission comprennent un arbre de transmission transversal, tourillonnant dans ledit tambour et formant axe de rotation du levier de tambour, dont la première extrémité porte ledit levier de tambour, dont la seconde extrémité est coudée et reliée mécaniquement à un point d'accrochage excentré du bras de récupérateur par un ressort, l'action conjuguée dudit ressort et de l'excentration du point d'accrochage tendant à rappeler le bras de récupérateur alternativement vers l'une et l'autre de ses positions de lancer ou de récupération, et tendant simultanément à rappeler les leviers de tambour et de bobine alternativement vers l'une et l'autre de leurs positions de verrouillage ou de déverrouillage.

D'autres objets, caractéristiques et avantages de la présente invention ressortiront de la description suivante de modes de réalisation particuliers, faite en relation avec les figures jointes, parmi lesquelles :

– la figure 1 est une vue en perspective d'une partie de moulinet selon l'invention, montrant la bobine, le récupérateur et les principales pièces mécaniques internes de verrouillage ;

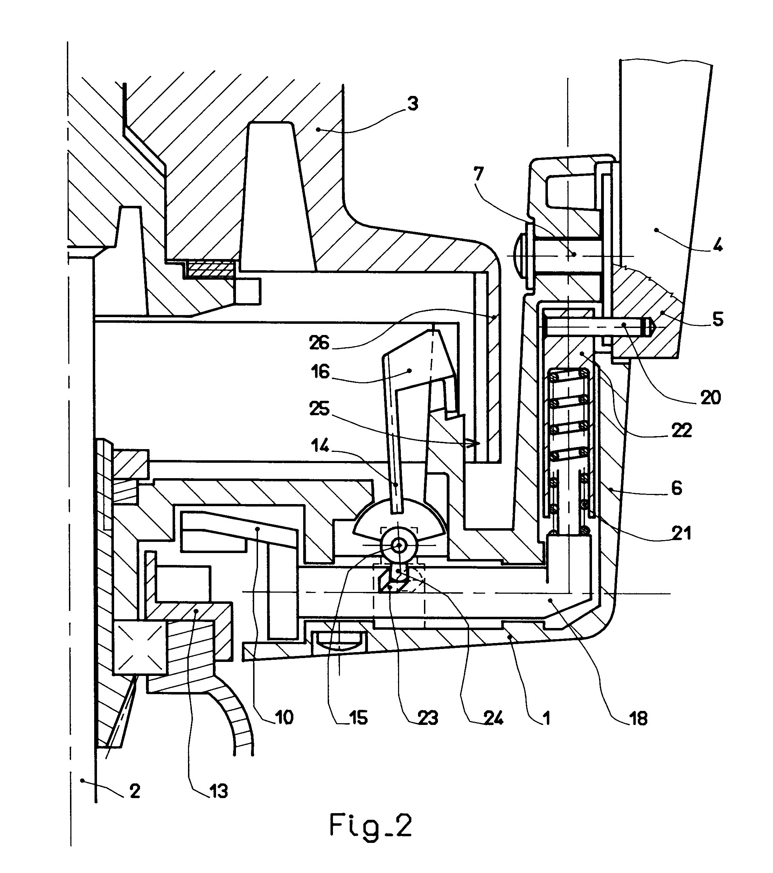

– la figure 2 est une vue de côté en coupe des éléments de la figure 1, selon un plan contenant les axes I-I et II-II ;

– la figure 3 est une vue schématique de face montrant le mouvement du bras de récupérateur ;

– la figure 4 illustre les mouvements des pièces de verrouillage de tambour ;

– la figure 5 est une vue de dessus en coupe des organes de la figure 1, montrant les moyens de verrouillage de tambour ;

– la figure 6 est une vue de détail montrant les mouvements des pièces de verrouillage de bobine ; et

– la figure 7 est une vue de face en coupe montrant les pièces de verrouillage de bobine.

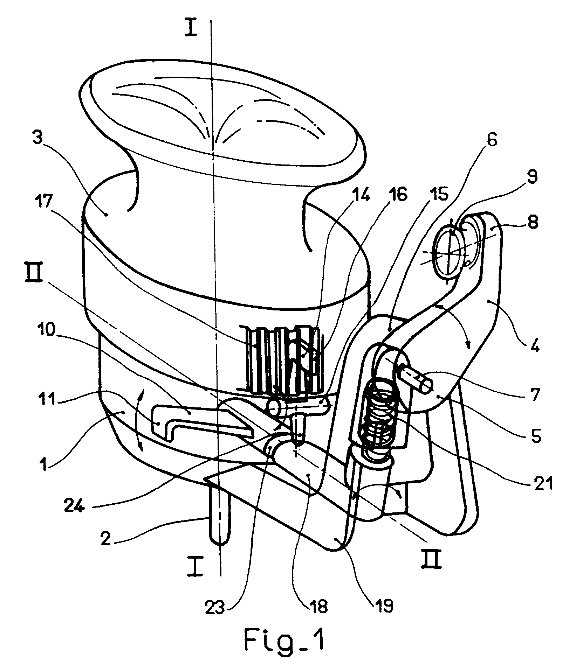

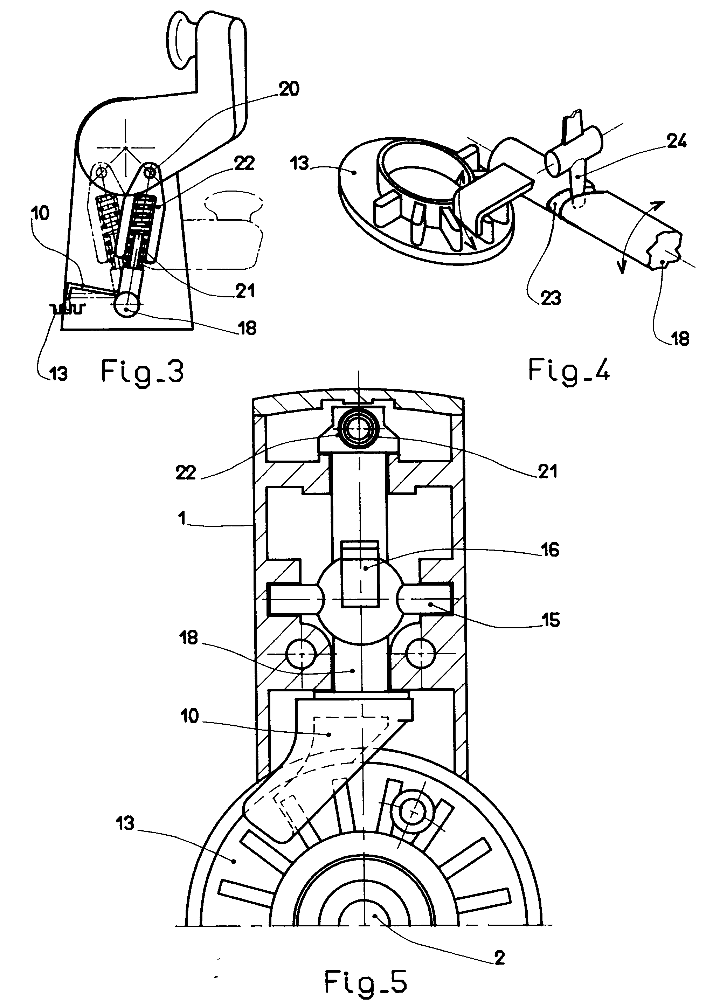

Comme le représentent les figures, le moulinet de pêche selon l'invention comprend un corps de moulinet, non représenté sur les figures, muni de moyens permettant sa fixation à une canne à pêche. Un tambour de récupérateur 1, monté rotatif sur le corps de moulinet selon un axe I-I longitudinal, est sollicité en rotation par une manivelle et un dispositif de transmission non représentés. Un arbre central 2 de moulinet, schématiquement représenté, est porté à une de ses extrémités par le corps de moulinet selon l'axe I-I longitudinal, et traverse le tambour 1 de récupérateur. Une bobine 3 est adaptée à l'autre extrémité de l'arbre central 2. Des moyens permettent de faire osciller longitudinalement l'arbre central 2 et la bobine 3 en fonction de la rotation du tambour 1 de récupérateur. Un bras de récupérateur 4 est articulé à sa première extrémité 5 sur une partie périphérique 6 de tambour selon un axe transversal 7, et porte à sa seconde extrémité 8 des moyens de guidage 9 de fil. Le bras de récupérateur 4 peut pivoter autour de son axe transversal 7 entre une première position de récupération, représentée sur la figure 1, dans laquelle le bras est orienté longitudinalement en périphérie de la bobine, et une seconde position de lancer, représentée en pointillés sur la figure 3, dans laquelle le bras est à l'écart de la bobine pour permettre le dévidement libre du fil hors de la bobine.

Un frein de bobine est adapté pour commander le couple de freinage en rotation axiale de la bobine 3 par rapport au corps de moulinet.

Les moyens décrits ci-dessus peuvent être des moyens habituellement utilisés dans les moulinets connus, qui sont à la portée de l'homme du métier. Il n'est donc pas utile de les décrire plus en détails.

Selon l'invention, le moulinet comprend en outre des moyens de verrouillage de tambour et de bobine, pour verrouiller respectivement en rotation axiale le tambour 1 sur le corps de moulinet et la bobine 3 sur le tambour 1, pour freiner ou empêcher leurs rotations axiales respectives lorsque le bras de récupérateur 4 est en seconde position de lancer. Ces moyens de verrouillage sont déverrouillables pour autoriser la libre rotation axiale respective du tambour 1 et de la bobine 3 lorsque le bras de récupérateur 4 est en seconde position de lancer. Les moyens de verrouillage sont actionnés par le bras de récupérateur 4 pour produire le verrouillage lorsque le bras est en seconde position de lancer et pour produire le déverrouillage lorsque le bras et en première position de récupération.

Les moyens de verrouillage de tambour 1 comprennent un levier de tambour 10, monté rotatif selon un axe II-II transversal, le levier de tambour 10 pouvant pivoter entre une position verrouillée dans laquelle la première extrémité 11 du levier de tambour 10 est engagée sur une portion correspondante 13 du corps de moulinet pour s'opposer à la rotation axiale du tambour 1, et une position déverrouillée dans laquelle la première extrémité 11 du levier de tambour 10 est à l'écart de la portion correspondante 13 du corps de moulinet pour autoriser la libre rotation axiale du tambour 1.

Dans le mode de réalisation représenté, la portion 13 de corps de moulinet, contre laquelle vient en appui l'extrémité 11 du levier de tambour 10 est un plateau transversal solidaire du corps de moulinet. De préférence, la face frontale du plateau transversal 13 est pourvue de nervures et rainures radiales, de sorte que lors de l'engagement de l'extrémité 11 du levier de tambour 10, aucun glissement n'est possible entre le levier 10 de tambour et la portion 13 de corps de moulinet, et aucune rotation n'est possible pour le tambour par rapport au corps de moulinet.

Les moyens de verrouillage de bobine comprennent un levier de bobine 14, monté rotatif selon un axe transversal 15 entre une position verrouillée dans laquelle la première extrémité 16 du levier de bobine 14 est engagée sur une portion correspondante 17 de la bobine 3 pour s'opposer à la rotation axiale relative de la bobine 3 par rapport au tambour 1, et une position déverrouillée dans laquelle la première extrémité 16 du levier de bobine 14 est à l'écart de la portion correspondante 17 de bobine pour autoriser la libre rotation axiale de la bobine 3.

Dans la position de verrouillage, la première extrémité 16 du levier de bobine 14 peut avantageusement venir en appui sur la face intérieure 25 de paroi périphérique 26 de la bobine 3.

De préférence, ladite face intérieure 25 de paroi périphérique 26 de bobine est pourvue de rainures et nervures longitudinales. De cette façon, lors de l'engagement de l'extrémité 16 du levier de bobine 14 en position de verrouillage, un glissement est possible entre l'extrémité 16 du levier de bobine 14 et la bobine 3, dans le sens axial, mais aucun glissement n'est possible dans le sens périphérique de la rotation de la bobine, produisant un blocage complet en rotation de la bobine 3.

Des moyens de transmission assurent la liaison mécanique fonctionnelle entre le bras de récupérateur 4 et respectivement le levier de bobine 14 et le levier de tambour 10 pour amener les leviers de bobine 14 et de tambour 10 en position verrouillée lorsque le bras de récupérateur 4 est en seconde position de lancer, et pour amener les leviers de bobine 14 et de tambour 10 en position déverrouillée lorsque le bras de récupérateur 4 est en première position de récupération.

Les moyens de transmission comprennent, dans le mode de réalisation représenté sur les figures, un arbre de transmission 18 transversal, disposé selon l'axe II-II, tourillonnant dans ledit tambour 1 et formant axe de rotation du levier de tambour 10. La première extrémité de l'arbre de transmission 18 porte ledit levier de tambour 10. La seconde extrémité 19 de l'arbre de transmission 18 est coudée et reliée mécaniquement par un ressort 21 à un point d'accrochage 20 excentré du bras de récupérateur 4. L'action conjuguée du ressort 21 et de l'excentration du point d'accrochage 20 de ce ressort par rapport à l'axe de rotation 7 du bras de récupérateur tend à rappeler le bras de récupérateur 4 alternativement vers l'une et l'autre de ses positions de lancer ou de récupération. Simultanément, le ressort 21 tend à rappeler les leviers de tambour 10 et de bobine 14 alternativement vers l'une et l'autre de leurs positions de verrouillage ou de déverrouillage.

Dans le mode de réalisation représenté sur les figures, le ressort 21 est un ressort hélicoïdal de compression, et est associé à un tube de guidage 22 dans lequel il coulisse et est maintenu sensiblement rectiligne.

Selon un autre mode de réalisation, on peut imaginer un ressort 21 de traction, quine nécessite alors pas de moyen de guidage.

Par la manoeuvre du bras de récupérateur 4 entre la position de récupération représentée sur la figure 3 en traits pleins et la position de lancer représentée sur la même figure 3 en pointillés, on provoque une rotation de l'arbre de transmission 18, qui assure un basculement simultané du levier de tambour 10 : lorsque le bras de récupérateur 4 est déployé en position de récupération, le ressort 21 et son tube de guidage 22 sont dans la position représentée en traits pleins sur la figure 3, et le levier de tambour 10 est écarté de la portion 13 fixe du corps de moulinet, permettant la libre rotation du tambour 1 par rapport au corps de moulinet. Par contre, lorsque le bras de récupérateur 4 est escamoté en position de lancer, le ressort 21 et le tube de guidage 22 sont dans la seconde position représentée en traits pointillés sur la figure 3, et le levier de tambour 10 est en appui sur la portion 13 du corps de moulinet, pour s'opposer à la rotation du tambour 1 par rapport au corps de moulinet.

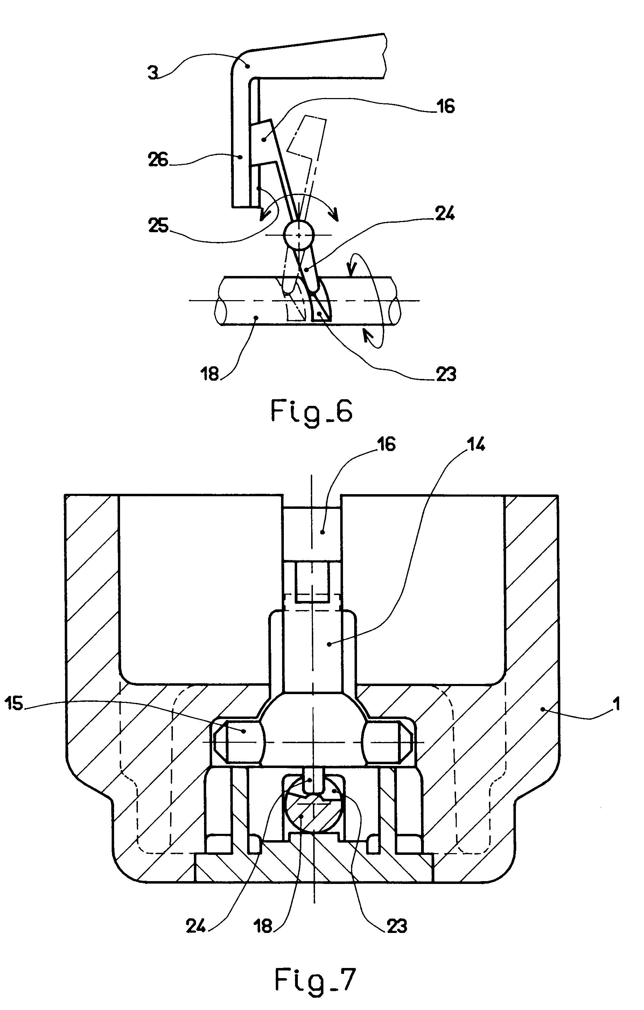

L'arbre de transmission 18 comprend en outre, sur une portion de sa périphérie, une rainure hélicoïdale 23 dans laquelle s'engage la seconde extrémité 24 du levier de bobine 14. L'axe transversal 15 du levier de bobine 14 est sensiblement perpendiculaire à l'arbre de transmission 18. De cette manière, la rotation de l'arbre de transmission 18, lors de la manoeuvre du bras de récupérateur 4, provoque le basculement du levier de bobine 14 entre ses positions respectives de verrouillage représentée en traits pleins sur la figure 6 et de déverrouillage représentée en pointillés sur la figure.6. En position de verrouillage, la première extrémité 16 du levier de bobine 14 vient en appui sur une portion de paroi périphérique de bobine.

Par rotation du bras de récupérateur 4, on produit ainsi l'oscillation du levier de bobine 14 entre sa position de verrouillage et sa position de déverrouillage. Le pas et le sens de la rainure hélicoïdale 23 sont choisis de façon que, lorsque le bras de récupérateur 4 est en position de récupération, l'extrémité 16 du levier de bobine 14 est à l'écart de la paroi 26 de bobine 3, comme le représente en pointillés la figure 6, alors que, lorsque le bras de récupérateur 4 est en position escamotée de lancer, l'extrémité 16 du levier de bobine 14 est engagée contre la face intérieure 25 de la paroi 26 de bobine.

Lors de l'actionnement du bras de récupérateur 4, le ressort 21 produit le rappel du bras de récupérateur vers l'une ou l'autre de ses positions extrêmes, dans lesquelles le mouvement est limité par des moyens de butée non représentés. Simultanément, ce même ressort 21 produit le maintien des autres pièces des moyens de transmission dans l'une et l'autre des positions verrouillée et déverrouillée. La structure selon l'invention ne nécessite donc aucune autre pièce tels que ressort ou butée, et simplifie considérablement la fabrication et le montage.

La position intérieure des rainures et nervures longitudinales de bobine 3, favorise la fiabilité et évite les inconvénients dus à l'encrassement inévitable des parties externes du moulinet lors de son utilisation.

La position interne des rainures et nervures de bobine évite en outre les risques d'accrochage du fil dans ces rainures lors de l'utilisation.

Le dispositif de l'invention permet le verrouillage de la bobine et du tambour dans n'importe quelle position angulaire de ces deux éléments. Il n'est ainsi pas nécessaire de ramener le tambour dans une position particulière pour effectuer le lancer, et cela facilite l'utilisation.

La présente invention n'est pas limitée aux modes de réalisation qui ont été explicitement décrits, mais elle en inclut les diverses variantes et généralisations contenues dans le domaine des revendications ci-après.

**Revendications**

1 - Moulinet de pêche comprenant:
- un corps de moulinet, muni de moyens permettant sa fixation à une canne à pêche,
- un tambour (1) de récupérateur, monté rotatif sur le corps de moulinet selon un axe I-I longitudinal, et sollicité en rotation par une manivelle et un dispositif de transmission,
- un arbre central (2) porté à une extrémité par le corps de moulinet selon l'axe I-I longitudinal, et traversant le tambour (1) de récupérateur,
- une bobine (3) adaptée à l'autre extrémité de l'arbre central (2),
- des moyens pour faire osciller longitudinalement l'arbre central (2) et la bobine (3) en fonction de la rotation du tambour de récupérateur (1),
- un bras de récupérateur (4), articulé à sa première extrémité (5) sur une partie périphérique (6) de tambour selon un axe transversal (7) et portant à sa seconde extrémité (8) des moyens de guidage de fil (9), le bras de récupérateur (4) pouvant pivoter autour de son axe transversal (7) entre une première position de récupération dans laquelle le bras (4) est orienté longitudinalement en périphérie de la bobine, et une seconde position de lancer dans laquelle le bras (4) est à l'écart de la bobine (3),
- un frein de bobine, adapté pour commander le couple de freinage en rotation axiale de la bobine (3) par rapport au corps de moulinet,
- des moyens de verrouillage de tambour (1) et de bobine (3), pour verrouiller respectivement en rotation axiale le tambour (1) sur le corps de moulinet et la bobine (3) sur le tambour (1) pour empêcherleurs rotations axiales respectives, les moyens de verrouillage étant déverrouillables pour autoriser leurs libres rotations axiales respectives, les moyens de verrouillage étant actionnés par le bras de récupérateur (4) pour produire le verrouillage lorsque le bras de récupérateur (4) est en seconde position de lancer et pour produire le déverrouillage lorsque le bras de récupérateur (4) est en première position de récupération,

caractérisé en ce que :

– les moyens de verrouillage de tambour comprennent un levier de tambour (10), monté rotatif selon un axe II-II transversal entre une position verrouillée dans laquelle la première extrémité (11) du levier de tambour (10) est engagée sur une portion correspondante (13) du corps de moulinet pour s'opposer à la rotation axiale du tambour (1), et une position déverrouillée dans laquelle la première extrémité (11) du levier de tambour (10) est à l'écart de la portion correspondante (13) du corps de moulinet pour autoriser la libre rotation axiale du tambour (1),

– les moyens de verrouillage de bobine comprennent un levier de bobine (14), monté rotatif selon un axe transversal (15) entre une position verrouillée dans laquelle la première extrémité (16) du levier de bobine (14) est engagée sur une portion correspondante (17) de bobine pour s'opposer à la rotation axiale relative de la bobine par rapport au tambour (1), et une position déverrouillée dans laquelle la première extrémité (16) du levier de bobine (14) est à l'écart de la portion correspondante (17) de bobine pour autoriser la libre rotation axiale de la bobine (3),

– des moyens de transmission assurent la liaison mécanique fonctionnelle entre le bras de récupérateur (4) et respectivement le levier de bobine (14) et le levier de tambour (10), pour amener les leviers de bobine (14) et de tambour (10) en position verrouillée lorsque le bras de récupérateur (4) est en seconde position de lancer, et pour amener les leviers de bobine (14) et de tambour (10) en position déverrouillée lorsque le bras de récupérateur (4) est en première position de récupération.

**2 -** Moulinet selon la revendication 1, caractérisé en ce que lesdits moyens de transmission comprennent un arbre de transmission (18) transversal, tourillonnant dans ledit tambour (1) et formant axe de rotation du levier de tambour (10), dont la première extrémité porte ledit levier de tambour (10), dont la seconde extrémité (19) est coudée et reliée mécaniquement à un point d'accrochage excentré (20) du bras de récupérateur (4) par un ressort (21), l'action conjuguée dudit ressort (21) et de l'excentration du point d'accrochage (20) tendant à rappeler le bras de récupérateur (4) alternativement vers l'une et l'autre de ses positions de lancer ou de récupération, et tendant simultanément à rappeler les leviers de tambour (10) et de bobine (14) alternativement vers l'une et l'autre de leurs positions de verrouillage ou de déverrouillage.

**3 -** Moulinet selon la revendication 2, caractérisé en ce que :

– ledit ressort (21) est un ressort hélicoïdal de compression,

– ledit ressort (21) est associé à un tube de guidage (22) dans lequel il coulisse et est maintenu sensiblement rectiligne.

**4 -** Moulinet selon l'une des revendications 2 ou 3, caractérisé en ce que :

– ledit arbre de transmission (18) comprend, sur une portion de sa périphérie, une rainure hélicoïdale (23) dans laquelle s'engage la seconde extrémité (24) du levier de bobine (14),

– l'axe transversal (15) de levier de bobine (14) est sensiblement perpendiculaire à l'arbre de transmission (18),

– de sorte que la rotation de l'arbre de transmission (18) provoque le basculement du levier de bobine (14) entre ses positions de verrouillage et de déverrouillage.

**5 -** Moulinet selon la revendication 4, caractérisé en ce que, en position de verrouillage, la première extrémité (16) du levier de bobine (14) vient en appui sur la face intérieure (25) de paroi périphérique (26) de bobine.

**6 -** Moulinet selon la revendication 5, caractérisé en ce que ladite face intérieure (25) de paroi périphérique (26) de bobine est pourvue de rainures et nervures longitudinales.

**7 -** Moulinet selon l'une quelconque des revendications 1 à 6, caractérisé en ce que, en position de verrouillage, la première extrémité (11) du levier de tambour (10) vient en appui sur la face frontale d'un plateau transversal (13) solidaire du corps de moulinet.

**8 -** Moulinet selon la revendication 7, caractérisé en ce que ladite face frontale du plateau transversal (13) est pourvue de nervures et de rainures radiales.

Fig_1

Fig. 2

Fig.3

Fig.4

Fig.5

Fig_6

Fig_7

**Office européen des brevets**

# RAPPORT DE RECHERCHE EUROPEENNE

Numero de la demande

EP 91 42 0259

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| D,A | FR-A-2 462 098 (MITCHELL SA,) <br> * page 7, ligne 39 - page 8, ligne 38; figures 1,7,8 * | 1,8 | A01K89/01 |
| D,A | EP-A-0 026 084 (BRUNSWICK CORPORATION) | | |
| A | FR-A-2 393 530 (ABU AKTIEBOLAG) | | |
| A | EP-A-0 369 904 (MITCHELL SPORTS S.A.) <br> * colonne 4, ligne 21 - ligne 51; figures 1-3 * | 3 | |
| A | FR-A-1 561 190 (CARPANO & PONS) | | |
| D,A | US-A-3 045 942 (HENZE) | | |
| A | US-A-4 747 559 (HITOMI) | | |
| D,A | US-A-4 509 705 (COUNCILMAN) | | |

**DOMAINES TECHNIQUES RECHERCHES (Int. Cl.5)**

A01K

Le présent rapport a été établi pour toutes les revendications

| Lieu de la recherche | Date d'achèvement de la recherche | Examinateur |
|---|---|---|
| LA HAYE | 21 OCTOBRE 1991 | VERDOODT S.J.M. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

        .........................................................................
& : membre de la même famille, document correspondant

EPO FORM 1503 03.82 (P0402)